# EUROPEAN PATENT SPECIFICATION

(11) **EP 0 381 972 B1**
(45) Date of publication and mention of the grant of the patent: **05.01.1994**
(21) Application number: 90101111.4
(22) Date of filing: 19.01.1990
(51) Int. Cl.: A23L 1/221, A23L 1/238, A23L 1/39

(54) **Condiment**
Gewürz
Condiment

(30) Priority: 06.02.1989 DE 3903507
(43) Date of publication of application: 16.08.1990
(73) Proprietor: CPC INTERNATIONAL INC., Englewood Cliffs New Jersey 07632-9976 (US)
(72) Inventor: Ammedick-Naumann, Claudia, Dipl.-Ing., D-7156 Wüstenrot (DE); Bohrmann, Hans, Dr., D-7129 Talheim (DE)
(74) Representative: Lederer, Franz, Dr.

(56) References cited:
- DE-A- 3 041 809
- US-A- 2 746 869
- US-A- 4 501 757
- "Fenaroli's Handbook of Flavor Ingredients", 1971, pages 112-113, Chemical Rubber Co., Cleveland, Ohio, US
- P. MONTAGNE: "Nouveau Larousse Gastronomique", edition revue et corrigée par R.J. Courtine, 1981, page 463, Librairie Larousse, Paris, FR

## Description

The present invention relates to the use of fenugreek seeds for modifying the taste of soy sauce and/or fish sauce and to condiments containing soy sauce and/or fish sauce and fenugreek seeds.

Soy sauce and fish sauce are known condiments that are regularly used especially in the Asian cuisine. However, they both have a characteristic inherent taste opposed to their use in the European cuisine. They are therefore used in special preparations only, and as a rule only in minor concentrations. This holds also for seasoning sauces containing soy or fish sauce, such as Sukiyaki or steak sauce, when used in combination with other seasoning ingredients.

Fenugreek (Trigonella foenum-graecum, also called Greek hay) is a plant belonging to the family of papilionaceous plants whose seeds are known as spice from ancient times. The seeds have a strong aromatic smell and taste somewhat bitter and somewhat slimy, with a peculiar after-taste. The seeds obtain a more pleasing taste by subjecting them to a heat treatment. Both during roasting and during cooking, the unpleasant smell and taste change to more pleasing flavors.

Due to the rather unpleasant smell and taste, the extremely hard seeds of yellowish brown color and a length of up to 4 mm are used only seldomly as spice in the cuisine of Central and Northern Europe. However, this spice is popular in India, Northern Africa, America, China and in the Balkan States, but here, too, fenugreek is employed mostly in ground condition in mixed spices,in particular curry powders. In Indian curry powders fenugreek is almost always present. Fenugreek has also been used for flavoring cheese. The roasted seeds are also used as coffee substitute in India.

It has been found surprisingly that especially fenugreek, which usually and so far has been used only little or not at all in European cooking because of its foreign smell and taste, is excellently suited for matching the taste of soy sauce and fish sauce, that is felt to be Asian, to the European taste.

Condiments are very popular in Central Europe. The most famous product is the product that is often named according to its inventor Julius Maggi, a condiment obtained by the hydrolysis of protein carriers of vegetable and animal origin with hydrochloric acid, with aromatic herbs also being added thereto occasionally. The protein carriers admitted for the production of condiments are exactly determined by Section 4 of the Regulations concerning Bouillon Cubes and Similar Products, 1940. Moreover, the term condiment may be used only for products produced in accordance therewith. Condiments have not only gained great importance as such in European cooking, but in addition thereto they are the basis for a large number of products produced by Maillard reaction and having a meat-like or a different spicy flavor, which are nowadays used in a large scope in products such as bouillon cubes, gravy etc.

An especially characteristic taste component of condiments is the so-called flavoring lactone (3-hydroxy-4-methyl-5-ethyl-(5H)-furan-2-one) which is formed only under the drastic reaction conditions of acid hydrolysis (temperatures above 100°C and pressure application).

The object of the invention therefore primarily also was to make a product available which, without containing flavoring lactone, has a condiment-like taste. Moreover, the product according to the invention, also in its other properties and possibilities of use, should be as similar as possible to known food condiments so that it can also serve as a substitute for the Maillard products which are usually made from condiments.

Surprisingly, this object could be solved by a simple mixing operation. It is therefore possible to dispense with the hydrolysis that is usually carried out with hydrochloric acid and requires high temperatures and pressures, and with the neutralization, separation of the humic acids, etc., required subsequent to hydrolysis.

Thus, subject matter of the invention is furthermore a condiment containing a) soy sauce and/or b) fish sauce, c) common salt, d) ground, untreated or roasted fenugreek seeds or fenugreek extract and possibly e) water.

The condiment according to the invention generally has the following composition:
a) 0 - 70 % soy sauce
b) 0 - 70 % fish sauce
   (with components a) + b) amounting to 10 - 85 %)
c) 5 - 20 % common salt
d) 1 - 30 % fenugreek seeds (ground, untreated or roasted or extract)
e) 0 - 80 % water.

Usual, commercially available products are employed as soy sauce. The same applies to the fish sauce. Preferably, a fish sauce of Thailand provenance is used. Fish sauce alone creates a less strong overall taste, whereas a combination of soy sauce and fish sauce results in a very round overall taste when mixed with fenugreek seeds in accordance with the invention.

In a further development of the invention it has been found that the condiment refined in its taste by fenugreek and containing soy or/and fish sauce can be further refined in its taste by additional additives such that a condiment is obtained which is equal or even superior to the known European condiments.

An intensification of the spicy taste is obtained by adding dried leaves or constituents of the roots of umbelliferae or apiaceae, e.g. lovage (Levisticum officinale Koch), celery (Apium graveolens L.), Angelica acutiloba L., Cnidium officinale L., Angelica utilis L., etc. The additives can be used as powders or as extract, for instance a lovage extract with 80 % dry substance. The round harmonic taste becomes more spicy and piquant by the addition of lovage and, thus, even more similar to the character of condiment.

Matching of the acidity character of the mixed condiment to that of usual condiments can be achieved by the addition of conventional food acids, such as citric acid or tartaric acid, in particular however by the addition of tamarind powder. The mild, round acidity of tamarind enhances the taste as a whole without influencing it towards a specific taste direction. Instead of tamarind, it is also possible to use tamarind substitutes of natural origin with a sourish taste, such as e.g. Asam Gelugar. In comparison therewith, citric acid or tartaric acid creates a somewhat striking and rough taste.

Moreover, for rounding off the taste, additional protein carriers, such as e.g. yeast extract, may be added, just as glutamate for matching the glutamic acid with the contents of conventional condiments.

The additives mentioned are added in general in the following proportions: lovage root 0.1 to 10 %, preferably 0.1 to 5 %, ground celery leaves 0.1 to 10 %, tamarind powder 0.1 to 10 %, citric acid 0.1 to 5 %, yeast extract 1 to 30 %, preferably 1 to 3 %, and/or glutamate 1 to 10 %.

A particularly preferred liquid condiment consists of
a) 10 - 50 %, preferably 10 - 15 % soy sauce
b) 5 - 50 %, preferably 5 - 10 % fish sauce
c) 10 - 20 %, preferably 15 - 20 % common salt
d) 1 - 30 %, preferably 1 - 5 % fenugreek extract
e) 20 - 70 %, preferably 50 - 55 % water
f) 0.1 - 5 %, preferably 0.1 -0.5 % lovage extract
g) 1 - 5 %, preferably 2 - 5 % tamarind powder
h) 1 - 30 %, preferably 1 - 3 % yeast extract
i) 2 - 8 %, preferably 4 - 6 % glutamate.

For the purposes of the present invention the fenugreek seeds may be ground directly and be used as powder. The taste of the seeds therefore is slightly bitter and floury. However, the seeds are preferably slightly roasted prior to grinding.

Instead of the seed powder a - preferably alcoholic - extract from the - preferably somewhat roasted - fenugreek seeds may be used as well. Suitable extracts are commercially available. Unless indicated otherwise, the fenugreek extract used is such an extract of somewhat roasted fenugreek seeds.

In case of using a fenugreek extract, it is expedient that the liquid to pasty extract is absorbed on common or table salt for better distribution.

For producing liquid products the liquid mixture, subsequent to mixing, is allowed to mature or is heated for making the time of maturing shorter. Heating to 70 to 90°C, preferably 80°C during 1 to 2 hours, preferably one hour, has turned out to be expedient.

Heating is especially advisable when fenugreek seeds are used so that the substances active in taste and smell are extracted from the seeds into the liquid medium, the same being also applicable when tamarind powder is added. Subsequent to heating, the mixture is filtered so that a clear solution is obtained.

In a typical preparation for a liquid condiment 10 to 50 % soy sauce or fish sauce, 10 to 20 % common salt and 20 to 70 % water are mixed with either 10 to 30 % untreated ground fenugreek seeds or 10 to 30 % roasted ground fenugreek seeds or 1 to 20 % fenugreek extract (80 % dry substance).

Instead of a liquid condiment sauce, it is also possible to produce a dry condiment when the corresponding dry products are used without the addition of water. Dry products of this type can be used for making products analogous to granular bouillon as well as other products contained in condiments as taste carrier.

For preparing the dry products, the constituents are also simply mixed with each other.

It is surprisingly possible by proceeding in accordance with the invention - i.e. without performing an acid hydrolysis - to make products by a pure mixing process, which are very similar or even superior to the table condiments which are very popular in the German-speaking areas. Moreover, these products do not contain flavoring lactone or other constituents typical of condiments, but rather the products according to the invention contain, in contrast to the proteins of conventional condiments that are subjected to acid hydrolysis, only the protein constituents obtained by natural fermentation.

The invention can be used not only as a solid or liquid seasoning, such as condiment, but also in all spheres in which seasonings based on condiments are employed. This includes products such as granular bouillon, bouillon and soup cubes, dried soups, gravies and sauces, canned goods, etc. and reaction flavorings produced by Maillard reaction. In addition thereto, the products according to the invention, of course, may also be used for enhancing the taste or restoring the full taste of conventional condiments in case the flavor substances typical of condiments have been extracted therefrom by a solvent extraction, e.g. with acetic ether, or by other processing methods, e.g. intensive decoloring.

### Example 1

In this example soy sauce is mixed with untreated or roasted fenugreek seed powder or extract for taste refining:
1a)
   20 % soy sauce
   18.5 % common salt
   12 % fenugreek seeds (untreated, ground)
   49.5 % water

As a consequence of the slime substances in the fenugreek, a gel-like product is created which is no longer flowable and which cannot be filtered. The taste is unfinished, "green", leguminous, while however a distinct seasoning taste is perceivable, although it does not yet satisfy the requirements to be met by a condiment.
1b)
   20 % soy sauce
   18.5 % common salt
   12 % fenugreek seeds (roasted, ground)
   49.5 % water
The consistency of the product is somewhat thinner than in example 1a), since slime substances are partly eliminated by roasting. The product is not filtrable.

The "green" flavor of example 1a) has largely disappeared, the taste is somewhat more harmonic and no longer leguminous, and there is a clear spicy taste.
1c)
   20 % soy sauce
   18.5 % common salt
   2 % fenugreek extract (80 % dry substance)
   59.5 % water
The product is of thin, fluid consistency, comparable to a condiment, and it is filtrable. It has a harmonic taste similar to a condiment.

### Example 2

The preparations are the same as in example 1, except that fish sauce instead of soy sauce is mixed with untreated and, respectively, roasted fenugreek seeds and fenugreek extract, respectively.

The physical and taste properties are comparable to those described in examples 1a) to c). However, fish sauce introduces a less strong overall taste into the mixture, but the slightly fishy inherent taste of the fish sauce is masked.

### Example 3

12 % soy sauce
8 % fish sauce
18.5 % common salt
12 % fenugreek seeds (roasted, ground)
49.5 % water
This combination of soy sauce and fish sauce produces the desired rounded overall taste.

### Example 4

4a)
   12 % soy sauce
   8 % fish sauce
   18.5 % common salt
   2 % fenugreek extract
   1 % lovage root powder
   58.5 % water

In this mixture, the spicy taste is further intensified by the addition of lovage root powder. The rich harmonic taste has become more spicy and more piquant and is even more similar to the character of classical condiments.
4b)
   12 % soy sauce
   8 % fish sauce
   18.5 % common salt
   2 % fenugreek extract
   1 % celery leaves (ground)
   58.5 % water

The taste is a bit stronger than that of example 4a), but is closer to the taste of condiment than without the addition of celery leaves.

### Example 5

5a)
   12 % soy sauce
   8 % fish sauce
   18.5 % common salt
   2 % fenugreek extract
   1 % lovage root powder
   2 % tamarind powder
   56.5 % water

The mild, round acidity of tamarind enhances the taste as a whole without influencing it towards a specific direction of taste.
5b)
   12 % soy sauce
   8 % fish sauce
   18.5 % common salt
   2 % fenugreek extract
   1 % lovage root powder
   2 % citric acid
   56.5 % water

The acid yields a somewhat "striking", rough taste, the overall impression is not as round as in example 5a).

### Example 6

12 % soy sauce
8 % fish sauce
18 % common salt
1.2 % fenugreek extract
0.2 % lovage extract (80 % dry substance)
2.4 % tamarind powder
2 % yeast extract
5 % glutamate
51.2 % water
The mixture is heated during one hour to approximately 80°C and is filtered after cooling.

The product has a rounded, excellent condiment taste that is equal or even superior to that of classical condiments.

### Example 7

By mixing the dry components without the addition of water, a dry product is obtained that may replace granulated bouillon or similar dried seasonings.
7a)
   10 - 50 % soy sauce powder
   10 - 50 % fish sauce powder
   1 - 5 % tamarind powder
   1 - 30 % yeast extract powder
   1 - 30 % fenugreek seeds, ground, roasted
   10 - 20 % salt
7b)
   20 - 60 % soy sauce powder
   1 - 5 % tamarind powder or citric acid
   1 - 30 % yeast extract powder
   1 - 30 % fenugreek extract
   10 - 20 % salt
   1 - 5 % glutamate
7c)
   20 - 60 % fish sauce powder
   1 - 5 % tamarind powder or tartaric acid
   0.1 - 5 % lovage extract or roots, ground
   1 - 30 % fenugreek seeds, ground
   10 - 20 % salt

## Claims

1. The use of fenugreek for refining the taste of soy sauce and/or fish sauce.

2. The use according to claim 1,
characterized in that untreated, ground fenugreek seeds are used.

3. The use according to claim 1,
characterized in that roasted, ground fenugreek seeds are used.

4. The use according to claim 1,
characterized in that an extract of roasted fenugreek seeds is used.

5. A condiment containing a) soy sauce and/or b) fish sauce, c) common salt, d) ground, untreated or roasted fenugreek seeds or fenugreek extract and possibly e) water.

6. A condiment according to claim 5,
characterized in that it contains
a) 0 - 70 % soy sauce
b) 0 - 70 % fish sauce
(with the components a) + b) amounting to 10 - 85 %)
c) 5 - 20 % common salt
d) 1 - 30 % fenugreek
e) 0 - 80 % water.

7. A condiment according to claim 5 or 6,
characterized in that it additionally contains 0.1 to 10 % lovage root and/or 0.1 to 10 % ground celery leaves and/or 0.1 to 10 % tamarind powder and/or 0.1 to 5 % citric acid and/or 1 to 30 % yeast extract and/or 1 to 10 % glutamate.

8. A condiment according to claim 7,
characterized in that it is in liquid form and contains
a) 10 - 50 %, preferably 10 - 15 % soy sauce
b) 5 - 50 %, preferably 5 - 10 % fish sauce
c) 10 - 20 %, preferably 15 - 20 % common salt
d) 1 - 30 %, preferably 1 - 5 % fenugreek extract
e) 20 - 70 %, preferably 50 - 55 % water
f) 0.1 - 5 %, preferably 0.1 - 0.5 % lovage extract
g) 1 - 5 %, preferably 2 - 5 % tamarind powder
h) 1 - 30 %, preferably 1 - 3 % yeast extract
i) 2 - 8 %, preferably 4 - 6 % glutamate.

9. A condiment according to claim 7,
characterized in that it is in solid form and contains
a) 0 - 60 % soy sauce powder
b) 0 - 60 % fish sauce powder
(with the components a) + b) amounting to 20 - 85 %)
c) 10 - 20 % common salt
d) 1 - 30 % fenugreek
as well as
1 - 5 % tamarind powder and/or citric acid
0 - 30 % yeast extract powder
0 - 5 % glutamate
0 - 5 % lovage powder.

## Patentansprüche

1. Verwendung von Bockshornklee zur Geschmacksveredelung von Sojasoße und/oder Fischsoße.

2. Verwendung nach Anspruch 1 dadurch gekennzeichnet, daß man unbehandelten, vermahlenen Bockshornkleesamen einsetzt.

3. Verwendung nach Anspruch 1, dadurch gekennzeichnet, daß man gerösteten, vermahlenen Bockshornkleesamen einsetzt.

4. Verwendung nach Anspruch 1, dadurch gekennzeichnet, daß man einen Extrakt aus gerösteten Bockshornkleesamen einsetzt.

5. Würzmittel enthaltend a) Sojasoße und/oder b) Fischsoße, c) Speisesalz, d) vermahlenen, unbehandelten oder gerösteten Bocksnornkleesamen oder Bockshornkleeextrakt und gegebenenfalls e) Wasser.

6. Würzmittel nach Anspruch 5, dadurch gekennzeichnet, daß es
a) 0-70 % Sojasoße
b) 0-70 % Fischsoße
(wobei die Komponenten a) + b) 10-85 % ausmachen)
c) 5-20 % Speisesalz
d) 1-30 % Bockshornklee
e) 0-80 % Wasser
enthält.

7. Würzmittel nach Anspruch 5 oder 6, dadurch gekennzeichnet, daß es zusätzlich 0,1-10 % Liebstöckelwurzel und/oder 0,1-10 % gemahlene Sellerieblätter und/oder 0,1-10 % Tamarindenpulver und/oder 0,1-5 % Zitronensäure und/oder 1-30 % Hefeextrakt und/oder 1-10 % Glutamat enthält.

8. Würzmittel nach Anspruch 7, dadurch gekennzeichnet, daß es in flüssiger Form vorliegt und
a) 10-50 %, vorzugsweise 10- 15 % Sojasoße
b) 5-50 %, vorzugsweise 5- 10 % Fischsoße
c) 10-20 %, vorzugsweise 15- 20 % Speisesalz
d) 1-30 %, vorzugsweise 1- 5 % Bockshornklee-Extrakt
e) 20-70 %, vorzugsweise 50- 55 % Wasser
f) 0,1- 5 %, vorzugsweise 0,1-0,5 % Liebstöckel-Extrakt
g) 1- 5 %, vorzugsweise 2- 5 % Tamarindenpulver
h) 1-30 %, vorzugsweise 1- 3 % Hefeextrakt
i) 2- 8 %, vorzugsweise 4- 6 % Glutamat
enthält.

9. Würzmittel nach Anspruch 7, dadurch gekennzeichnet, daß es in fester Form voriiegt und
a) 0-60 % Sojasoßenpulver
b) 0-60 % Fischsoßenpulver
(wobei die Komponenten a) + b) 20-85 % ausmachen)
c) 10-20 % Speisesalz
d) 1-30 % Bockshornklee
sowie
1- 5 % Tamarindenpulver und/oder Zitronensäure
0-30 % Hefeextraktpulver
0- 5 % Glutamat
0- 5 % Liebstöckelpulver
enthält.

## Revendications

1. Utilisation du fenugrec pour améliorer le goût de la sauce au soja et/ou de la sauce au poisson.

2. Utilisation suivant la revendication 1, caractérisée en ce que des graines de fenugrec moulues, non traitées, sont utilisées.

3. Utilisation suivant la revendication 1, caractérisée en ce que des graines de fenugrec moulues, torréfiées sont utilisées.

4. Utilisation suivant la revendication 1, caractérisée en ce qu'un extrait de graines de fenugrec torréfiées est utilisé.

5. Condiment contenant a) de la sauce au soja et/ou b) de la sauce au poisson, c) du sel de cuisine, d) des graines de fenugrec moulues, non traitées ou torréfiées ou bien un extrait de fenugrec et, éventuellement, e) de l'eau.

6. Condiment suivant la revendication 5, caractérisé en ce qu'il contient
a) 0 à 70 % de sauce au soja
b) 0 à 70 % de sauce au poisson
(les constituants a) + b) représentant 10 à 85 %)
c) 5 à 20 % de sel de cuisine
d) 1 à 30 % de fenugrec
e) 0 à 80 % d'eau.

7. Condiment suivant la revendication 5 ou 6, caractérisé en ce qu'il contient en outre 0,1 à 10 % de racines de livèche et/ou 0,1 à 10 % de feuilles de céleri moulues et/ou 0,1 à 10 % de poudre de tamarin et/ou 0,1 à 5 % d'acide citrique et/ou 1 à 30 % d'extrait de levure et/ou 1 à 10 % de glutamate.

8. Condiment suivant la revendication 7, caractérisé en ce qu'il est sous forme liquide et contient
a) 10 à 50 %, de préférence 10 à 15 % de sauce au soja
b) 5 à 50 %, de préférence 5 à 10 % de sauce au poisson
c) 10 à 20 %, de préférence 15 à 20 % de sel de cuisine
d) 1 à 30 %, de préférence 1 à 5 % d'extrait de fenugrec
e) 20 à 70 %, de préférence 50 à 55 % d'eau
f) 0,1 à 5 %, de préférence 0,1 à 0,5 % d'extrait de livèche
g) 1 à 5 % , de préférence 2 à 5 % de poudre de tamarin
h) 1 à 30 %, de préférence 1 à 3 % d'extrait de levure
i) 2 à 8 %, de préférence 4 à 6 % de glutamate.

9. Condiment suivant la revendication 7, caractérisé en ce qu'il est sous forme solide et contient
a) 0 à 60 % de sauce au soja en poudre
b) 0 à 60 % de sauce au poisson en poudre
(les constituants a) + b) représentant 20 à 85 %)
c) 10 à 20 % de sel de cuisine
d) 1 à 30 % de fenugrec
ainsi que
1 à 5 % de poudre de tamarin et/ou d'acide citrique
0 à 30 % d'extrait de levure en poudre
0 à 5 % de glutamate
0 à 5 % de poudre de livèche
